# EUROPEAN PATENT APPLICATION

(11) **EP 4 604 592 A1**
(43) Date of publication of application: **20.08.2025**
(21) Application number: 24305268.5
(22) Date of filing: 16.02.2024
(51) Int. Cl.: H04W 12/0431, H04W 12/06, H04W 84/06

(54) **SATELLITE ACTING AS LOCAL 5G STANDALONE NETWORK TO ADDRESS INTERMITTENT/TEMPORARY CONNECTIVITY**

(71) Applicant: THALES DIS FRANCE SAS, 92190 Meudon (FR)
(72) Inventor: PAULIAC, Mireille, 13470 CARNOUX EN PROVENCE (FR); DANY, Vincent, 13400 AUBAGNE (FR); FINE, Jean-Yves, 13010 MARSEILLE (FR)
(74) Representative: Lotaut, Yacine Diaw

(57) **Abstract**

Method to perform identification followed by authentication and Key Agreement procedure of a user equipment to a satellite hosting a secure database for AKA acting as a local network provider with intermittent/temporary connectivity, said method including the steps of detecting, by a user equipment, a service link and selecting a network provided by the satellite; sending, by the user equipment, a connection request to the satellite; generating, by the satellite, an AUTHENTICATE request to the local secure database for AKA for the requesting subscriber identifier; generating, by the secure database for AKA, an Authentication Vector (AV) from a key K_nsat derived from a master key for the satellite nsat, and a proprietary bit of Authentication Management Field (AMF); returning, by the local secure database for AKA, an authentication response. Other aspects are described.

## Description

### FIELD OF USE

The present disclosure relates to a method to perform authentication of a 5G or above compliant user equipment to a network element with intermittent/temporary connectivity, as well as a user equipment and a local Unified Data Management UDM implementing the methods.

### BACKGROUND

The store and forward operation in a 5G system with satellite access is intended to provide some level of communication service for user equipment (UE) under satellite coverage with intermittent/temporary satellite connectivity (e.g. when the satellite is not connected via a feeder link or via ISL to the ground network) for delay-tolerant communication service.

The support of S&F satellite operation is especially suited for the delivery of delay-tolerant/non-real-time IoT satellite services with NGSO satellites (Non Geostationary).

The authentication flow as described in 3GPP TS 33.501 §6.1.3.2 is not suitable for such use case because it is supposed to be achieved in tens of seconds with continuous connectivity between UE and core network, whereas the store and forward use case cannot guarantee such conditions.

### SUMMARY

An aspect of the disclosure is directed toward a method to perform identification followed by authentication and Key Agreement procedure of a user equipment to a satellite hosting a secure database for AKA acting as a local network provider with intermittent/temporary connectivity, said method comprising the steps of:
detecting, by a user equipment, a service link and selecting a network provided by the satellite;
sending, by the user equipment, a connection request to the satellite;
generating, by the satellite, an AUTHENTICATE request to the local secure database for AKA for the requesting subscriber identifier;
generating, by the secure database for AKA, an Authentication Vector (AV) from a key K_nsat derived from a master key for the satellite nsat, and a proprietary bit of Authentication Management Field (AMF) that is used to indicate that the authentication is performed with a satellite acting as a local network;
returning, by the local secure database for AKA, an authentication response to the satellite comprising a random number RAND, authentication token AUTN, keys, and an expected user response;
challenging, by the satellite, the mobile equipment with RAND and AUTN ;
challenging, by the mobile equipment, the USIM with RAND, and AUTN with the proprietary bit of AMF to indicate that the authentication is performed with a satellite acting as a local network for an AUTHENTICATE command;
deriving, by the USIM, of K_nsat from master key MK;
checking, by the USIM, the AMF value and deriving K_nsat from MK from KDF, where n=nsat was stored previously;
returning, by the USIM, the user response RES matching the expected user response and keys computed with the K_nsat; and
normal continuation of the ATTACH procedure.

Thus, amongst the advantages of the present disclosure are that it enables use cases with low/intermittent connectivity, such as the store and forward use case, while maintaining actual security consensus (each entity keep same level of key/security); if a satellite is stolen, there is no security impact for the other satellites; and there is no limitation on the number of satellites that UE could communicate with since the "n" value is no longer transmitted thanks to the proprietary bits of the AMF.

In an aspect of the disclosure, the subscriber identity is an IMSI, and the connection response is an ATTACH request including the IMSI.

An aspect of the disclosure is directed toward adding a E-UTRAN Cell Id (ECI) as a parameter to the command for the USIM to perform the derivation; and retrieving, by the USIM, nsat from the ECI.

In an aspect of the disclosure, the secure database for AKA is a HSS/AUC.

In an aspect of the disclosure, the subscriber identity is a SUPI, and the connection request is a REGISTRATION request including a SUCI.

An aspect of the disclosure is directed toward pre-provisioning the user equipment with a secret SUCI master key SUCI_MK and public key of a master SUCI key pair.

An aspect of the disclosure is directed toward sending, from the mobile equipment to the USIM, a GET IDENTITY COMMAND with specific context to provide NR Cell ID (NCI) as a parameter.

An aspect of the disclosure is directed toward retrieving, by the USIM, the nsat from the NCI, deriving a SUCI Public Key for nsat, computing SUCI, and responding with SUCI.

In an aspect of the disclosure, the secure database for AKA is an AUSF/UDM/ARPF/SIDF.

In an aspect of the disclosure, the derived key K_nsat takes the role of permanent subscriber K to perform AKA procedure.
An aspect of the disclosure is directed toward a user equipment and a satellite system, wherein the telecommunication system is configured to perform an identification followed by authentication and Key Agreement procedure of the user equipment by the satellite system.

In an aspect of the disclosure, the user equipment is in communication with the satellite system without the use of a feeder link.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 illustrates the provisioning of keys according to the invention in a local LUDM_nSUCI of the present disclosure;
- Figure 2 illustrates the concealed identifier generation according to the present disclosure;
- Figure 3 illustrates the registration of a User Equipment of the present disclosure;
- Figure 4 illustrates an example of a telecommunications system according to present disclosure;
- Figure 5 illustrates an example of authentication by a network element according to the present disclosure;
- Figure 6 illustrates an example of an authentication according to a protocol of the present disclosure; and
- Figure 7 illustrates an example of an authentication according to another protocol of the present disclosure.

### DETAILED DESCRIPTION

In the following detailed description, reference is made to the accompanying drawings that show, by way of illustration, specific embodiments in which the disclosure may be practiced. These embodiments are described in sufficient detail to enable those skilled in the art to practice the disclosure. It is to be understood that the various embodiments of the disclosure, although different, are not necessarily mutually exclusive. For example, a particular feature, structure, or characteristic described herein in connection with one embodiment may be implemented within other embodiments without departing from the spirit and scope of the disclosure. In addition, it is to be understood that the location or arrangement of individual elements within each disclosed embodiment may be modified without departing from the spirit and scope of the disclosure. The following detailed description is, therefore, not to be taken in a limiting sense, and the scope of the present disclosure is defined only by the appended claims, appropriately interpreted, along with the full range of equivalents to which the claims are entitled. In the drawings, like numerals refer to the same or similar functionality throughout the several views.

The following description includes references to various methods executed by a processor of an integrated circuit chip. As is common in the field, there may be phrases herein that indicate these methods or method steps are performed by software instructions or software modules. As a person skilled in the art knows, such descriptions should be taken to mean that a processor, in fact, executes the methods, software instructions, and software modules.

The present disclosure is directed to an evolution of 3GPP IOPS service (tactical bubble) to accommodate a use case where there is intermittent/temporary connectivity with the network, such as with a 5G satellite connection. A satellite operating in satellite store and forward mode contains eNB/gNB functionalities and potentially CN functions. For example, the satellite may be considered as a full PLMN seen by the UE with registration capabilities.

To provide registration capabilities if a feeder link is not available, one possible solution also is to have on board of the satellite HSS/AuC (or for a 5G protocol, AUSF/UDM/ARPF/SIDF) capabilities to run a classical AKA procedure. But HSS/AuC (resp. AUSF/UDM/ARPF/SIDF) contains subscriber key credential and there may be a security risk to have such credential onboard of a satellite. For example if satellite is lost or stolen, the user subscription credentials might be compromised.

To mitigate this risk the disclosure presented here considers the satellite in Store and forward mode re-using security architecture and principals as described in TS 33.401 [aa] Annex F "Isolated E-UTRAN Operation for Public Safety".

For 4G system, this implies that the satellite will act as local EPC including at least MME and HSS functionality, and that the HSS/AuC on board of satellite only contains derived keys from master key MK, for the given the satellite.

In this way, the master key associated with the subscription may not be compromised in any case. On the user equipment side, the subscriber master MK is securely stored in USIM.

Compared to classical 4G AKA, the UE shall first decode E-UTRAN Cell Identity and provide it to the USIM, that will derive the subscriber master key to obtain symmetrical key K_nsat for this satellite. Nominal AKA procedure may be performed after with symmetrical key K_nsat.

For 5G system, this implies that the satellite will act as local 5GC including at least AMF and AUSF/UDM/ARPF/SIDF functionalities. The concept described in Annex F of TS 33.401 [aa] can be reused, where ECI is replaced by NR Cell Id (NCI) and the SUPI/SUCI (de)concealment steps shall be added.

In accordance with the disclosure, the satellite may be considered as a local 5G standalone network which can authenticate the user equipment. If a satellite is stolen, there is no security impact on the data bases hosted in the other satellites.

The disclosure utilizes a SUCI key pair derivation, such as for a local 5G standalone network, for the computation of SUCI for a satellite acting as a local network. It modifies the AUTHENTICATE command defined for IOPS in order to be able to address a high number of satellites. There is no longer limitation on the number of satellites that the user equipment UE could communicate with.

The User Equipment may be a computing device such as a laptop computer, a tablet, a telephone, a media player, or other portable electronic device, a wearable device, a headphone, an embedded device, a television, a gaming device, a navigation device, an electronic device with Internet of Things (IoT) functionality, an equipment that implements the functionality of two or more of these devices, or other electronic equipment. Also considered are any other type of electronic computing device having wireless communication capability that can include communication via one or more wireless communication protocols such as used for communication on: a wireless wide area network (WWAN), a wireless metro area network (WMAN) a wireless local area network (WLAN), a wireless personal area network (WPAN), a near field communication (NFC), a cellular wireless network, a fourth generation (4G) Long Term Evolution (LTE), LTE Advanced (LTE-A), fifth generation (5G), and/or sixth generation (6G) or other present or future developed advanced cellular wireless networks. Other types of network-linked systems and devices are considered as well, such as, for instance, vehicles and M2M devices, so long as they are interacting with a network.

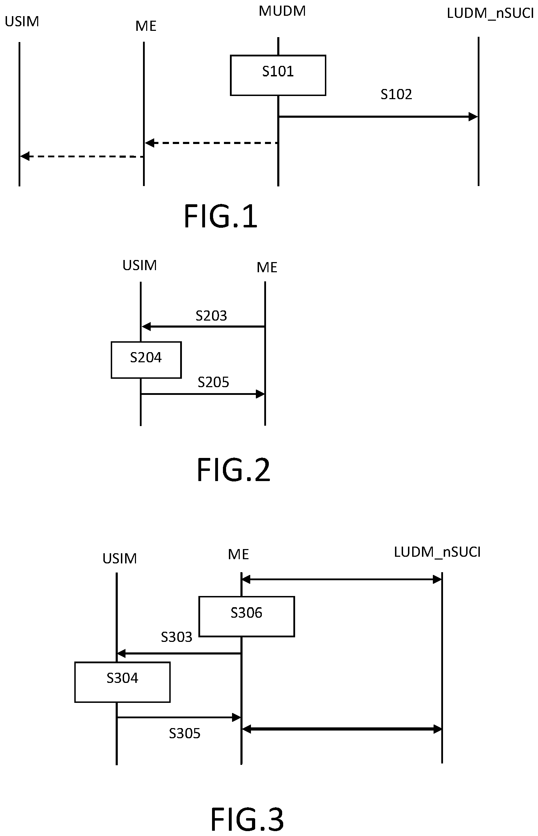

Figure 1 illustrates the provisioning of keys according to the disclosure in a local Unified Data Management/Authentication credential Repository and Processing Function LUDM_nSUCI.

A macro Unified Data Management, generally coupled with a Subscription Identifier De-concealing Function and an Authentication credential Repository and Processing Function MUDM has, as a prerequisite, a master SUCI key pair (dM, QM) and a SUCI master secret key SUCI_MK. The SUCI master secret key SUCI_MK may be used to derive a local SUCI key pair that is used to calculate the SUCI. The SUCI master secret key SUCI_MK may have appropriate entropy to keep dM safe even if several private keys dnSUCI of several local UDM are stolen. The macro Unified Data Management MUDM may also store local UDM identifiers, referenced as nSUCI, and an associated function f(nSUCI) per local LUDM_nSUCI.

Thus the value nSUCI identifies the local network element associated with the Unified Data Management LUDM_nSUCI to define the local SUCI key pair.

nSUCI may be determined from a NR Cell Global Identity (NCGI) (Mobile Country Codes MCC | Mobile Network Codes MNC | gNB ID | Cell ID), in whole or in part, used directly or via a mapping table. That is to say, the nSUCI may take the value of the NCGI.

In a first step S1, the Macro Unified Data Management MUDM derives a local private key dnSUCI of a local key pair per local Unified Data Management LUDM_nSUCI. Typically the computation of the local private key is as follows:
dnSUCI = KDF(SUCI_MK|nSUCI|f(nSUCI)) x dM mod N with N as a curve order. KDF stands here for a cryptographic key derivation function, based on a strong pseudorandom function. A KDF could be for example a pseudorandom function based on a hash function a.k.a HKDF (RFC5869). It is further noted here that the value 0 mod N must be avoided to make the derived key dnSUCI functional even if it has a very low chance of occurring given the size of KDF output.

The derivation of the local private key thus uses the secret SUCI master key SUCI_MK, the master private key of the master key pair dM and the value nSUCI related to the local 5G standalone network.

In a step S2, the macro UDM MUDM provisions local LUDM_nSUCI with the corresponding private key dnSUCI. Each local LUDM_nSUCI is thus identified with an identifier "nSUCI" and it stores the private SUCI key dnSUCI.

Figure 2 illustrates the mechanism of local key derivation for SUCI per local network according to an aspect of the disclosure. To enable this key derivation, a secure component USIM in a user equipment UE intended to be connected using a local UDM is advantageously previously provisioned with necessary parameters for the implementation of the disclosure. This provisioning is done during personalization phase or using Over-The-Air OTA provisioning. Typically this provisioning is performed by involving the macro Unified Data Management MUDM preliminary to any registration of the user equipment ME to a local 5G standalone network with a local Unified Data Management LUDM_nSUCI.

The secure component is thus provisioned not only with a SUPI assigned for local 5G network, but also with the secret SUCI master key SUCI_MK and with the public key QM of the master SUCI key pair.

In an aspect, of the disclosure, as shown in a step S3, the mobile equipment ME may send to the secure component USIM a command, typically a get identity cmd, comprising a specific context providing sufficient information relative to local 5G network identifier nSUCI as parameter.

The Get Identity command is the actual command used by the mobile to request a SUCI from the USIM. In this command, there is a context parameter that allows the card to adapt the SUCI calculation. For example, there may be two possible contexts; a basic case called "SUCI" and another called "SUCI NSWO" because in a Non-seamless WLAN Offload NSWO case the card must generate the SUCI differently.

According to an aspect of the disclosure, there may be a third context for IOPS in the Get Identity command as besides defined in the standard, where the user equipment, typically a cell phone, inputs data for the secure component to deduce the nSUCI.

According to an aspect of the disclosure, the SUCI being generated by the mobile equipment ME, the secure component returns only the derived public key to the ME. In this case a new command is introduced according to the invention to get the derived public key.

The reception of the specific context triggers, at the USIM side, a step S4 of derivation of QnSUCI using the master public key QM, the master secret key SUCI_MK and the value nSUCI using the function KDF also used by the macro Unified Data Management MUDM.

As above mentioned, a function f(nSUCI) is advantageously used as input parameter for the KDF. The computation is thus advantageously as follows:
QnSUCI = KDF(SUCI_MK|nSUCI|f(nSUCI)).QM, where '.' denotes in this formula the Elliptic curve point multiplication.

This local public key QnSUCI then takes the role of home network public key for SUCI concealment as besides defined in standardized specification for the registration mechanism.

In a step S5, the secure component USIM either returns the SUCI if USIM is configured to generate the SUCI by itself or returns the derived public key QnSUCI to the ME if USIM is configured to have the SUCI generated by the ME.

Figure 3 illustrates the registration of the user equipment UE to a network element with a local Unified Data Management LUDM_nSUCI with which the mobile equipment ME is connected as illustrated by a double arrow. Registration procedure as already defined in 5G specifications and in other specification to come can benefit from the disclosure.

The disclosure proposes derivation of both the secret SUCI master key SUCI_MK and the master SUCI key pair to conceal the SUPI in function of a value nSUCI associated to the local network LUDM_nSUCI.

Thus, as shown on figure 3, in a step S6, the ME extracts the specific context providing sufficient information relative to local 5G network identifier nSUCI as parameter from its connection with the local network LUDM_n. This extraction is based on associated Tracking Area Code TAC and/or NR Cell Global Identity NCGI, in whole or in part, used directly or via a mapping table. The value nSUCI is thus determined.

Then in a step S3, the ME sends a command to the secure component USIM as also described in figure 2. According to the invention, the command comprises the value nSUCI of the local LUDM_nSUCI or all necessary parameters for the secure component USIM to determine its value.

Thanks to the process as shown on figure 2, the secure component USIM is compliant with an operation with a local Unified Data Management LUDM_nSUCI, i.e. is compliant with IOPS operation. Specifically, the secure component USIM knows a PLMN identity assigned for IOPS, the SUPI assigned for IOPS and the SUCI master secret key SUCI_MK. It also has access to table for f(nSUCI) to be used for the derivation mechanism when needed. This is the interest of the invention to precisely enable this table to be updated, typically via Over-The-Air provisioning in case of stolen local Unified Data Management LUDM_nSUCI. The invention not only provides a diversification of the sets of keys used by each of the local network but also enables to update the sets of keys to be used by a same operating local network when there is suspicion of spying and/or forging.

In a step S4, the secure component USIM makes as described in figure 2. In a step S5, necessary cryptographic material is sent to the ME to be used in the pursuit of the registration procedure with the local Unified Data Management illustrated by a large double arrow on figure 3. Such a registration procedure is one as described in standardized registration process already defined or to come and is thus not detailed here. The invention concerns all registration process where a concealed SUPI is used.

An advantage of the disclosure is the possibility to update table in the USIM with OTA if one local UDM/ARPF has been compromised. The function f(n_{SUCI}) allows to recover the tactical bubble « nSUCI » when there is suspicion that this tactical bubble « nSUCI » has been compromised.

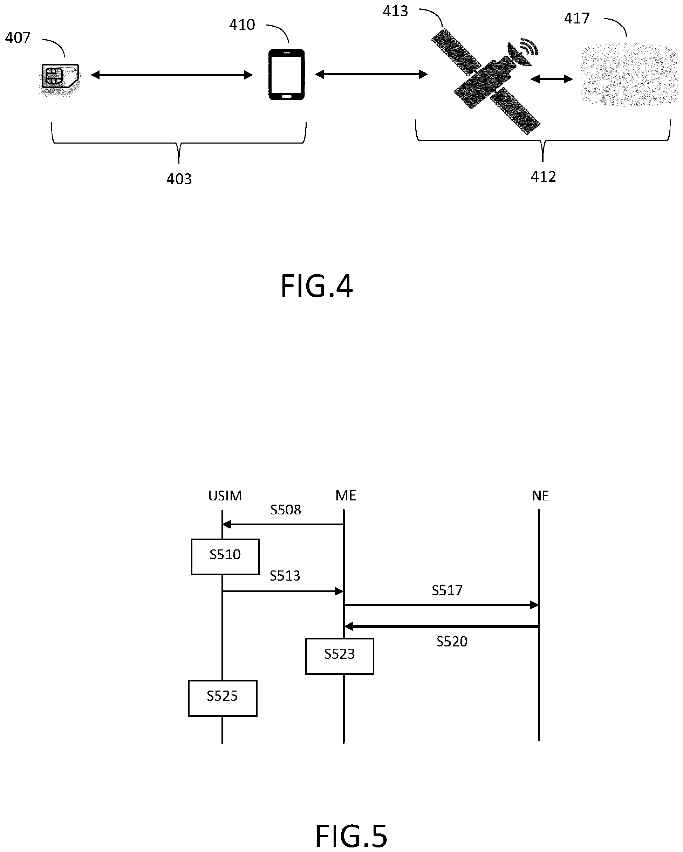

FIG. 4 demonstrates an exemplary system for store and forward operation between a satellite and a user equipment 403. The user equipment 403 may be a mobile equipment 410 that is paired with a secure component 407, such as a USIM, and examples of the user equipment 403 were previously described. The user equipment 403 may be in communication with a satellite system 412. The satellite system 412 may be an orbiting telecommunication device 413 that may contain or otherwise be in communication with a secure database for AKA 417, such as a local Unified Data Management (UDM) network product with an Authentication credential Repository and Processing Function (ARPF) . The satellite system 412 may be identified with an identifier "nSUCI", and may store a private key for SUCI for this "local network." The satellite system 412 may also store a K_n for AKA procedure for each subscriber to the telecommunication system, such as for a user of the user equipment 410 and/or for the user equipment 410 itself. Likewise, the user equipment 403 may be pre-provisioned with a secret SUCI master key SUCI_MK and public key of a master SUCI key pair, as well as a master key MK for an AKA procedure.

FIG. 5 demonstrates an aspect of the present disclosure where the network connection is between a user equipment that includes a USIM and a mobile equipment ME and a network element NE. The network element may have a connection with the user equipment UE that is characterized by intermittent and/or temporary connectivity. For instance, such a network element NE may be a satellite. The satellite may have an associated local Unified Data Management LUDM_nSUCI. Thus, the satellite may be identified with an identifier nSUCI. The satellite may store a private key for SUCI for this local network. Additionally, the satellite may store a K_n for each subscriber, such as for an AKA procedure.

Aspects of this process may incorporate or otherwise resemble the processes previously described. For instance, during a step S508, the mobile equipment ME may use a "Get Identity command" toward the secure component USIM, with specific context to provide local 5G network identifier "nSUCI" as a parameter.

In S510, the secure component USIM may derive the SUCI Public Key for the local network. The SUCI Public key represents the value of nSUCI. In the case where the local network is a satellite, then nSUCI is the NR Cell Global Identity NCGI. The secure element USIM may also conduct a SUCI computation. Further, the secure element USIM may store the value of nSUCI.

In S513, the secure element USIM may transmit the SUCI for the local network (in this case, the satellite) to the mobile equipment ME. The mobile equipment ME then uses the SUCI to register with the satellite, as in S517.

In S520, the satellite may commence the authentication procedure. This may trigger an AUTHENTICATE command by the mobile equipment ME, as in S523. For instance, the network element NE may use a proprietary bit of AMF to indicate to the user equipment UE that the authentication is performed, with a satellite acting as a local network.

The USIM may derive the K_n from MK, as in S525. The secure element USIM may check the AMF value and derive K_n from MK thanks to KDF, where "n" is taken to be the stored value for nSUCI. The derived key K_n may takes the role of the permanent subscriber key K, such as to perform an AKA procedure.

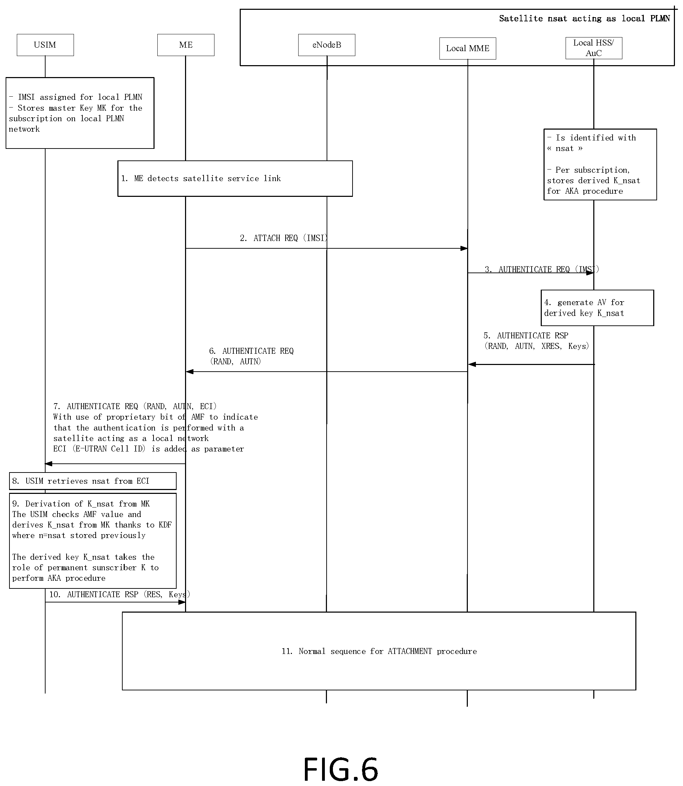

Fig. 6 is a demonstration of a satellite acting as a node for an evolved packet core (EPC) operation, such as that used for providing converged voice and data services on a 4G Long-Term Evolution (LTE) network. There may be several initial conditions for the operation:
- USIM is configured with IMSI and master key MK for local PLMN
- HSS/AuC on board of the satellite is configured with IMSI and derived key K_nsat for satellite Nsat.
- Satellite identifier nsat matches eNodeB_Id.

The operation may be as follows:
1. UE detects service link and select the local PLMN.
2. UE sends connection request (ATTACH request) to the local MME
3. Local MME generates the AUTHENTICATE REQ to the local HSS/AuC for the requesting IMSI
4. Local HSS/Auc generates authentication vector (AV) from the key Knsat derived from MK for the satellite nsat. Proprietary bit of AMF is used to indicate that the authentication is performed with a satellite acting as a local network.
5. Local HSS returns authentication response to the local MME
6. Local MME challenges the UE with RAND and AUTN
7. ME challenges the USIM with RAND, and AUTN with proprietary bit of AMF to indicate that the authentication is performed with a satellite acting as a local network for the AUTHENTICATE CMD. The ECI (E-UTRAN Cell Id) is also added as parameter to the command for the USIM to perform the derivation.
8. USIM retrieves nsat from ECI
9. Derivation of K_nsat from MK by the USIM. The USIM checks AMF value and derives K_nsat from MK thanks to KDF where n=nsat stored previously. The derived key K_nsat takes the role of permanent subscriber K to perform AKA procedure.
10. USIM returns RES and keys computed with this K_nsat
11. Normal continuation of the ATTACH procedure .

There may be some impacts on elements of the operation, such as the following:
USIM:
   - Retrieves nsat from ECI provided by the UE in AUTHENTICATE cmd.
   - derives K_nsat from MK with nsat.
UE:
   - New parameter ECI on AUTHENTICATE cmd.
HSS/AuC:
   - HSS/AuC on board of the satellite is configured with IMSI and derived key K_nsat for satellite nsat.

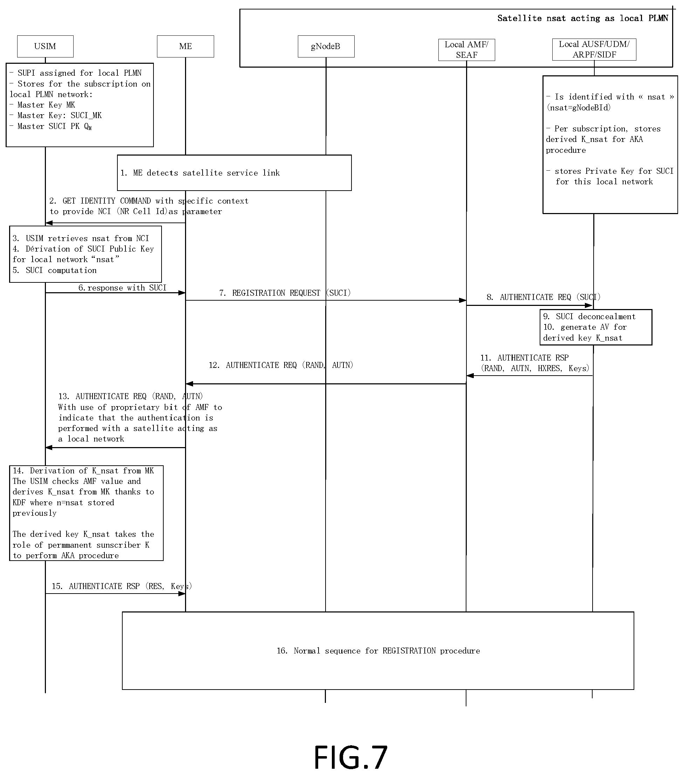

FIG. 7 demonstrates a workflow for using the satellite as a network node for a store and forward operation for a different framework protocol. For example, this operation may be used for a 5GS protocol. There may be several initial conditions:
- USIM is configured with SUPI and master key MK for local PLMN, together with master key and certificate for SUPI/SUCI: Master Key SUCI_MK, Master SUCI PK QM
- Local AUSF/UDM/ARPF/SIDF on board of the satellite is configured with SUPI and derived key K_nsat for satellite nsat, together with private key for SUCI, described herein as nsat, which may correspond to the previous nSUCI.
- Satellite identifier nsat matches gNodeB_Id.

The steps may be as follows:
1. UE detects service link and select the local PLMN.
2. GET IDENTITY COMMAND with specific context to provide NCI (NR Cell Id) as parameter.
3. USIM retrieves nsat from NCI.
4. USIM derives SUCI Public Key for "nsat".
5. USIM computes SUCI.
6. USIM responds with SUCI.
7. UE sends connection request (REGISTRATION REQUEST) to the local AMF.
8. Local AMF generates the AUTHENTICATE REQ to the local AUSF/UDM/ARPF/SIDF for the requesting SUCI.
9. local AUSF/UDM/ARPF/SIDF de-conceals the SUCI.
10. Local AUSF/UDM/ARPF/SIDF generates AV from the key K_nsat derived for the satellite nsat. Proprietary bit of AMF is used to indicate that the authentication is performed with a satellite acting as a local network.
11. Local AUSF/UDM/ARPF/SIDF returns authentication response to the local AMF.
12. Local AMF challenges the UE with RAND and AUTN.
13. ME challenges the USIM, with RAND, and AUTN with proprietary bit of AMF to indicate that the authentication is performed with a satellite acting as a local network for the AUTHENTICATE CMD.
14. Derivation of K_nsat from MK by the USIM. The USIM checks AMF value and derives K_nsat from MK thanks to KDF where n=nsat stored previously. The derived key K_nsat takes the role of permanent subscriber key to perform AKA procedure.
15. USIM returns RES and keys computed with this K_nsat.
16. Normal continuation of the REGISTRATION procedure. There may be some impacts on elements of the operation, such as the following:
   USIM:
      - retrieves nsat from NCI provided by the UE in the GET IDENTITY cmd.
      - derives K_nsat from MK with nsat
   UE:
      - New parameter NCI on GET IDENTITY cmd.
   Local AUSF/UDM/ARPF/SIDF:
      - AUSF/UDM/ARPF/SIDF on board of the satellite is configured with SUPI and derived key K_nsat for satellite nsat, together with private key for SUCI computation.

In the above detailed description, reference is made to the accompanying drawings that show, by way of illustration, specific embodiments in which the invention may be practiced. These embodiments are described in sufficient detail to enable those skilled in the art to practice the invention. The above detailed description is, therefore, not to be taken in a limiting sense, and the scope of the present invention is defined only by the appended claims, appropriately interpreted.

## Claims

1. Method to perform identification followed by authentication and Key Agreement procedure of a user equipment to a satellite hosting a secure database for AKA acting as a local network provider with intermittent/temporary connectivity, said method comprising the steps of:
detecting, by a user equipment, a service link and selecting a network provided by the satellite;
sending, by the user equipment, a connection request to the satellite;
generating, by the satellite, an AUTHENTICATE request to the local secure database for AKA for the requesting subscriber identifier;
generating, by the secure database for AKA, an Authentication Vector (AV) from a key K_nsat derived from a master key for the satellite nsat, and a proprietary bit of Authentication Management Field (AMF) that is used to indicate that the authentication is performed with a satellite acting as a local network;
returning, by the local secure database for AKA, an authentication response to the satellite comprising a random number RAND, authentication token AUTN, keys, and an expected user response;
challenging, by the satellite, the mobile equipment with RAND and AUTN ;
challenging, by the mobile equipment, the USIM with RAND, and AUTN with the proprietary bit of AMF to indicate that the authentication is performed with a satellite acting as a local network for an AUTHENTICATE command;
deriving, by the USIM, of K_nsat from master key MK;
checking, by the USIM, the AMF value and deriving K_nsat from MK from KDF, where n=nsat was stored previously;
returning, by the USIM, the user response RES matching the expected user response and keys computed with the K_nsat; and
normal continuation of the ATTACH procedure.

2. Method according to claim 1, wherein the subscriber identity is an IMSI, and the connection response is an ATTACH request including the IMSI.

3. Method according to claim 2, further comprising adding a E-UTRAN Cell Id (ECI) as a parameter to the command for the USIM to perform the derivation; and retrieving, by the USIM, nsat from the ECI.

4. Method according to claims 2 or 3, wherein the secure database for AKA is a HSS/AUC.

5. Method according to claim 1, wherein the subscriber identity is a SUPI, and the connection request is a REGISTRATION request including a SUCI.

6. Method according to claim 5, further comprising pre-provisioning the user equipment with a secret SUCI master key SUCI_MK and public key of a master SUCI key pair.

7. Method according to claims 5 or 6, further comprising sending, from the mobile equipment to the USIM, a GET IDENTITY COMMAND with specific context to provide NR Cell ID (NCI) as a parameter.

8. Method according to claim 7, further comprising retrieving, by the USIM, the nsat from the NCI, deriving a SUCI Public Key for nsat, computing SUCI, and responding with SUCI.

9. Methoding according to any of claims 5 to 8, wherein the secure database for AKA is an AUSF/UDM/ARPF/SIDF.

10. The method according to any of the previous claims, wherein the derived key K_nsat takes the role of permanent subscriber K to perform AKA procedure.

11. A telecommunication system comprising a user equipment (403) and a satellite system (412), wherein the telecommunication system is configured to perform an identification followed by authentication and Key Agreement procedure of the user equipment (403) by the satellite system (412) according to the method of claim 1.

12. The telecommunication system according to claim 11, wherein the user equipment (403) is in communication with the satellite system (412) without the use of a feeder link.
